**Europäisches Patentamt**

**European Patent Office**

**Office européen des brevets**

(19)

(11) Veröffentlichungsnummer: **0 009 626**
**B1**

(12) **EUROPÄISCHE PATENTSCHRIFT**

(45) Veröffentlichungstag der Patentschrift: **15.12.82**

(21) Anmeldenummer: **79103205.5**

(22) Anmeldetag: **29.08.79**

(51) Int. Cl.³: **H 04 Q 7/04,**
**H 04 Q 11/04, H 04 M 9/02**

(54) Kommunikationssystem für ortsgebundene und mobile Teilnehmer.

(30) Priorität: **29.09.78 DE 2842632**

(43) Veröffentlichungstag der Anmeldung:
**16.04.80 Patentblatt 80/8**

(45) Bekanntmachung des Hinweises auf die Patenterteilung:
**15.12.82 Patentblatt 82/50**

(84) Benannte Vertragsstaaten:
**AT BE CH FR GB IT NL SE**

(56) Entgegenhaltungen:
DE - A - 1 566 826
DE - A - 2 341 971
DE - A - 2 609 283

NACHRICHTENTECHNISCHE ZEITSCHRIFT,
Band 27, Heft 7, Juli 1974, Berlin, DE, HEROLD:
"Ein Funktelephonsystem mit Codemultiplex",
Seiten 253—259

ARCHIV FÜR ELEKTRONIK UND
ÜBERTRAGUNSTECHNIK (Electronics and
communication), Band 27, Heft 4, April 1973,
Stuttgart, DE, SCHENKEL: "Entwurf eines
integrierten digitalen Nachrichtensystems mit
Vielfachzugriff für ein beliebig verzweigtes
Breitbandnetz", Seiten 168—176

(73) Patentinhaber: **SIEMENS AKTIENGESELLSCHAFT**
**Berlin und München**
**Postfach 22 02 61**
**D-8000 München 22 (DE)**

(72) Erfinder: **Schwärtzel, Heinz, Dipl.-Math.**
**Staudinger Strasse 55**
**D-8000 München 83 (DE)**
Erfinder: **Unterberger, Hans, Dr.**
**Groschenweg 48a**
**D-8000 München 82 (DE)**

(56) Entgegenhaltungen:
**IEEE INTERNATIONAL CONFERENCE ON**
**COMMUNICATIONS, 11—13 Juni 1973, New**
**York, US, HAFNER et al.: "A digital loop**
**communication system", Seiten 50—24 bis**
**50—29**

**SIEMENS ZEITSCHRIFT, Band 46, Heft 8,**
**August 1972, Berlin, DE, ALBRECHT et al.:**
**"Personensuchanlagen in Verbindung mit**
**Fernsprech Nebenstellenanlagen der ESK-**
**Crosspoint-Technik", Seiten 663—669**

Courier Press, Leamington Spa, England.

EP 0 009 626 B1

Kommunikationssystem für ortsgebundene und mobile Teilnehmer

Die Erfindung bezieht sich auf ein Kommunikationssystem nach dem Oberbegriff des Patentanspruchs 1.

In bestimmten Kommunikationssystemen, vorzugsweise in Fernsprechnebenstellenanlagen, ist die Erreichbarkeit der Teilnehmer von besonderer Wichtigkeit. Die Forderung danach, daß die Teilnehmer auch dann jederzeit erreichbar sind, wenn sie sich nicht in der Nähe ihres Fernsprechapparates aufhalten, führte in der Vergangsheit zur Einführung von sogenannten Personensucheinrichtungen. Mit solchen Personensucheinrichtungen kann der gewünschte Teilnehmer allerdings nicht in Kommunikation mit dem Anrufenden treten. Er kann lediglich aufmerksam gemacht bzw. aufgefordert werden, sich über einen für ihn erreichbaren Fernsprechapparat mit einem vereinbarten Anschluß in Verbindung zu setzen. Dazu muß er unter Umständen eine wichtige Tätigkeit unterbrechen.

Personensucheinrichtungen der genannten Art sind z.B. aus der Siemens-Druckschrift "Personensucheinrichtungen", Bestell-Nr. N 157/1385 bekannt.

Aus der DE—A—1 566 826 ist eine Personenrufanlage mit drahtloser Übertragung des Rufes bekannt, bei der vorgesehen ist, daß eine Nebenstellen-Telephonanlage über Signalumsetzer mit dem Rufsender der Personenrufanlage derart gekoppelt ist, daß bei einem Ruf durch einen Nebenstellenteilnehmer auf der normalen Nebenstellenrufnummer des gerufenen Teilnehmers nicht nur das Rufzeichen an seinem Telephonapparat ertönt, sondern auch vom Rufsender der Personenrufanlage die ihm zugeordnete Kenntonfolge ausgesendet wird.

Der Erfindung liegt die Aufgabe zugrunde, die weiter oben angeführten Nachteile zu vermeiden. Es soll durch die Erfindung ermöglicht sein, einen normalen Teilnehmeranschluß des Kommunikationssystems, z.B. einer Fernsprechnebenstellenanlage, vom orstgebundenen auf mobilen Betrieb umzuschalten und jedem berechtigen Teilnehmer an jedem in Frage kommenden Ort über Endgeräte leitungsfrei Zugriff zu einem Übertragungskanal zu gestatten, so daß Verbindungswüsche in Form von ankommenden Gesprächen oder dgl. befriedigt werden können.

Der Gespächspartner muß über die Nebenstellenanlage Zugriff zu der von dem mobilen Teilnehmerendgerät abgegebenen Information haben.

Diese Aufgabe unterscheidet sich wesentlich von der, wie sie an übertragungsstrecken in Nebenstellenanlagen gestellt werden, da dort nur zwei oder mehrere an bestimmten Orten erreichbare Teilnehmer miteinander verbunden werden müssen. Aus diesem Grund ist es weder zweckmäßig noch technisch sinnvoll, die Leitungen der Nebenstellenanlage mitzuverwenden.

Die genannte Aufgabe wird durch die im kennzeichnenden Teil des Patentanspruchs 1 angegebenen Merkmale gelöst.

Weiterbildungen der Erfindung sind durch die in den Unteransprüchen angegebenen Merkmale gekennzeichnet.

Im folgenden soll die Erfindung an Hand einer, ein Ausführungsbeispiel für die Erfindung betreffenden Figur erläutert werden.

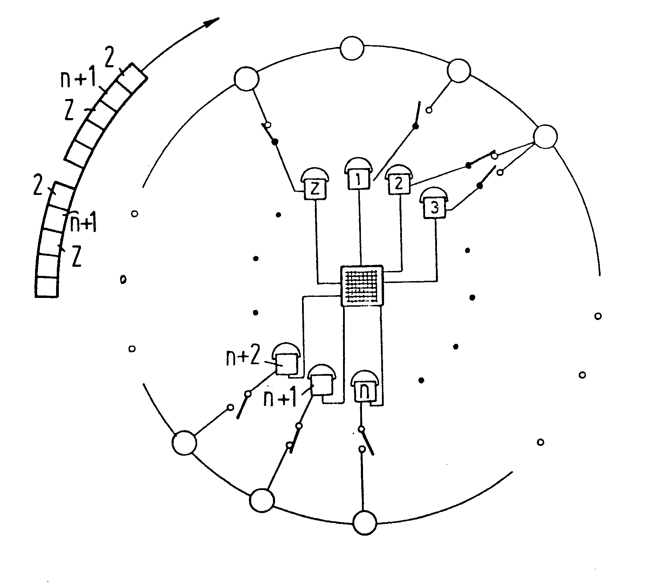

Die Figur zeigt schematisch die Struktur und die Wirkungsweise des erfindungsgemäßen Kommunikationssystems mit mehreren Teilnehmern 1, 2, 3 ... n, n+1, n+2 und einer Zentrale Z, die zum einen alle an eine Vermittlungseinrichtung und zum anderen über Schaltmittel an eine Ringleitung angeschlossen sind.

Wie bereits erwähnt, zeigt die Figur schematisch die Struktur und die Wirkungsweise des erfindungsgemäßen Kommunikationssystems mit mehreren Teilnehmern 1, 2, 3 ... n, n+1, n+2 und einer Zentrale Z. Wie ersichtlich, sind außerdem auf der Ringleitung Einrichtungen erforderlich, um die Informationen der Leitung zu entnehmen bzw. neue hinzuzufügen. Die Art der Einrichtungen wird durch das gewählte Übertragungsverfahren bestimmt.

Die Übertragungsstrecke (Ringleitung) hat die Aufgabe, jede an mobile Teilnehmerendgeräte adressierte Information in sämtlichen Räumen verfügbar zu machen und außerdem die von ihnen an beliebigen Orten abgehenden Informationen in der Nebenstellenanlage für die entsprechenden Gesprächspartner bereitzustellen.

Die Struktur und Organisation der Nebenstellenanlage selbst bleibt vollkommen unverändert. Als einziges Zugeständnis für die Zusatzeinrichtung muß eine Umschaltmöglichkeit für ortsgebundenen bzw. mobilen Betrieb in den dafür zugelassenen Telefonapparaten vorgesehen werden. Über diese Schalter werden die Teilnehmerapparate mit einer leitungsgebundenen Aus- und Eingabevorrichtung an die Übertragungsstrecke angeschlossen. Diese Aus- und Eingabeeinrichtungen wiederum sind mit einer Ringleitung, die durch jeden Raum im Bereich der Nebenstellenanlage geht, untereinander verbunden. In jedem Raum ist eine Einrichtung, über die von dem mobilen Teilnehmerendgerät Zugriff zu der Übertragungsstrecke möglich ist.

Neben dieser Lösung sind auch andere denkbar; so könnte man, z.B. anstatt beim Teilnehmer umzuschalten, die Teilnehmerleitung umschalten und direkt in der Abfragestelle in die Ringleitung gehen. Das würde aber einen Eingriff in die Nebenstellenanlage notwendig machen. Grundsätzlich unterscheidet sich diese Lösung von der hier vorgeschlagenen dadurch, daß ein Teil der Aufgaben zentral durchgeführt wird und die Teilnehmerleitungen während der umgeschalteten Zeit nicht belegt sind. Ein System für mobilen Zugriff muß aber auf jeden Fall in allen Räumen dezentrale Aus- und Eingabevorrichtungen haben. Auch die freie Leitung bringt keine Vorteile, weil sie während der umgeschalteten Zeit nicht für andere Zwecke benützt werden kann. Besonders die Forderungen nach Geheimhaltung und Betriebssicherheit können mit der hier vorgeschlagenen Konzeption wesentlich einfacher erfüllt werden.

Wird ein Teilnehmer angerufen, der im Augenblick nicht in der Nähe seines Telefons ist, so wird sein Apparat auf die Ringleitung geschaltet. In sämtlichen Räumen des zur Nebenstellenanlage gehörenden Bereiches wird die auf der Ringleitung vorhandene Information über Funk ausgesendet. Wird der Ruf von dem tragbaren Endgerät erkannt, so wird dies dem Teilnehmer durch ein vereinbartes Signal mitgeteilt. Erst dann wird auch der Sender des Endgerätes in Betrieb genommen. Außer dem Sender ist in jedem Raum auch noch ein Empfänger, über den die vom Teilnehmer kommenden Signale in die Ringleitung eingespeist werden können. Erreichen sie den Punkt an der Ringleitung, wo der Telefonapparat des Teilnehmers angeschlossen ist, so wird die Information entnommen und über den Telefonapparat des gerufenen Teilnehmers über die Nebenstellenanlage dem Gesprächspartner zugeführt.

Die Übertragung zwischen Ringleitung und Teilnehmerendgerät muß so gestaltet sein, daß die im Ring umlaufende Information den Teilnehmer auch tatsächlich erreichen kann. Da das Teilnehmerendgerät aber mobil sein soll, kommt nur eine Funkübertragung zusammen mit Multiplexverfahren für die Übertragung mehrerer Kanäle in Frage.

Sollen die Leitungen verkehrsmäßig gut ausgenützt werden, so ist es sinnvoll, jedem Teilnehmer freien Zugriff zu allen Kanälen zu geben Frequenzmultiplexverfahren erfordern dafür aber relativ großen Aufwand, deshalb ist es zweckmäßiger, Zeitmultiplexverfahren zu benützen, wobei jeder Informationsblock mit der Adresse des gewünschten Empfängers versehen ist wie schematisch in der Figur gezeigt ist. Ist ein Teilnehmer an die Ringleitung angeschlossen, so wird von ihm in jedem Rahmen nur ein Informationsblock übertragen. Wenn die Anzahl der Übertragungskanäle knapp ist, so kann man, um Übertragungskapazität zu sparen, darauf verzichten, z.B. in Gesprächspausen, in jedem Rahmen einen Platz zu belegen.

Die Synchronisierung der verschiedenen technischen Einrichtungen ist bei einer Übertragung mit Rahmen erforderlich, sehr oft aber recht aufwendig. Gelingt es, den Anfang eines Rahmens so zu kennzeichnen, daß er überall ohne Schwierigkeit erkannt wird, so kann eine zentrale Synchronisierung der Teilnehmerstationen entfallen, wodurch sich der Aufwand erheblich verringert.

Ist der Teilnehmer auf mobile Teilnehmerendeinrichtungen geschaltet, so muß seine Information durch eine Einspiesungseinrichtung auf die Übertragungsstrecke gebracht werden. Eine feste zeitliche Zuordnung der Kanäle innerhalb eines Rahmens ist relativ aufwendig. Günstiger ist es in dem vorliegenden Anwendungsfall, den ersten freien Zeitschlitz abzuwarten und mit dem anliegenden Informationsblock zu belegen.

Wird kein freier Zeitschlitz gefunden, so meldet die Einspeisungseinrichtung über den Fernsprechapparat an die Vermittlungsstelle der Nebenstellenanlage, daß der Teilnehmer zur Zeit nicht erreicht werden kann.

In jedem Raum im Bereich der Nebenstellenanlage ist ein Sender, mit dem die gesamte auf dem Ringleiter umlaufende Information ausgestrahlt wird. Dafür kann sowohl eine elektrische als auch eine optische Übertragung gewählt werden. Von dem mobilen Teilnehmerendgerät wird die Information empfangen und daraufhin untersucht, ob für den Teilnehmer Information vorhanden ist. Wird eine solche Information gefunden, so wird sie in ein hörbares Signal umgewandelt und der Sender des Teilnehmerendgerätes automatisch eingeschaltet.

Die vom Teilnehmer abgegebene Information wird an einem Endgerät der Ringleitung empfangen, für die Übertragung vorbereitet und in dem nächsten freien Zeitschlitz übertragen. Damit die Übertragungskanäle gut ausgenützt werden, ist es wichtig, daß von der Endeinrichtung am Ringleiter erkannt wird, ob der gesuchte Teilnehmer in seinem Sende- und Empfangsbereich ist. Ist dies der Fall, so wird die für den gesuchten Teilnehmer ankommende Information auf der Übertragungsstrecke eliminiert. Für die Bestimmung des Aufenthaltsorts des Teilnehmers (bzw. des Teilnehmerendgerätes) kann die automatische Einschaltung des Senders verwendet werden.

Erreicht die vom mobilen Teilnehmerendgerät gesuchte Information den Raum, in dem der dazugehörige Fernsprechapparat steht, so wird in der Ausgabeinrichtung der entsprechende Informationsblock dem Rahmen entnommen. Die Information wird über eine Leitung zum Fernsprechapparat geführt und steht somit dem Gesprächspartner über die Nebenstellenanlage zur Verfügung. Bei mobilen Übertragungssystemen ist die Adressierung der Teilnehmer besonders wichtig, folgende Gesichtspunkte müssen dabei gebührend berücksichtigt werden:

—Die Adresse muß jederzeit einwandfrei erkennbar sein.
—Die Adresse muß so gesichert sein, daß die Information von Unbefugten nicht abgerufen werden kann.
—Die Sende- und Empfangsgeräte müssen so gestaltet werden, daß durch Manipulation weder falsche Identität vorgetäuscht, noch andere Teilnehmer abgehört werden können.

Eine Adressierung, die solchen Ansprüchen genügt, ist normalerweise sehr aufwendig. Hier wirkt sich aber die Struktur des vorgeschlagenen Systems sehr günstig aus. Der Verkehr zwischen Fernsprechapparat und mobilem Teilnehmerendgerät geht nicht über die Vermittlungsstelle, somit muß die Adresse also nur von den Einrichtungen des jeweiligen Teilnehmers erkannt werden. Durch feste Zuordnung eines mobilen Teilnehmergerätes zu einem bestimmten Fernsprechapparat kann dieser Kombination eine feste Adresse zugeordnet werden, die von keinem anderen Teilnehmer entschlüsselt werden kann.

Die Realisierung eines solchen Systems kann von der Entwicklung der Lichtwellenleitertechnik oder Infrarot-Übertragungstechnik im Raum stark abhängig sein; zum Beispiel kann durch billige Lichtwellenleiter mit zulässigen Bitraten bis zu 100 MBit/s die Wirtschaftlichkeit dieses Systems erheblich beeinflußt werden, denn für kleine und große Nebenstellenanlagen könnte man dann dasselbe System und dieselbe Technik verwenden.

**Patentansprüche**

1. Kommunikationssystem für ortsgebundene und mobile Teilnehmer, bei dem der gerufene mobile Teilnehmer nach Erkennen der Adresse durch sein mobiles Teilnehmerendgerät durch ein dieser Adresse zugeteiltes Signal aufmerksam gemacht und der Sender dieses mobilen Teilnehmerendgerätes in Betrieb gesetzt wird und bei dem für den Teilnehmer ankommende und von dem Teilnehmer abgehende Informationen zwischen der betreffenden ortsgebundenen Teilnehmerstation und dem betreffenden mobilen Teilnehmerendgerät ausgetauscht werden, dadurch gekennzeichnet, daß als Übertragungsstrecke eine Ringleitung vorgesehen ist, die durch jeden Raum im Bereich einer vorhandenen Vermittlungseinrichtung geführt ist und in die teilnehmerindividuelle Aus-/Eingabevorrichtungen eingefügt sind, daß die betreffenden ortsgebundenen Teilnehmerstationen (1, 2, 3 ... n, n+1, n+2) sowie eine Vermittlungsstation (Z) außer an die Vermittlungseinrichtung auch über teilnehmerindividuelle Schaltmittel an die ihnen jeweils zugeordneten Aus-/Eingabevorrichtungen angeschlossen sind, daß in jedem betreffenden Raum eine aus einem Sender und einem Empfänger bestehende Verbindungseinrichtung vorgesehen ist, über die von einem mobilen Teilnehmerendgerät aus ein Zugriff zu der Übertragungsstrecke ermöglicht ist, daß die Teilnehmerstation (z.B. n+1) eines angerufenen Teilnehmers, der sich nicht an seinem Platz befindet, über das betreffende teilnehmerindividuelle Schaltmittel auf die Ringleitung geschaltet wird und daß eine vorhandene Information in allen betreffenden Räumen drahtlos mit einer dem gerufenen Teilnehmer zugeordneten Adresse ausgesendet wird.

2. Kommunikationssystem nach Anspruch 1, dadurch gekennzeichnet, daß die Ringleitung als elektrische Leitung ausgeführt ist.

3. Kommunikationssystem nach Anspruch 1, dadurch gekennzeichnet, daß die Ringleitung als optische Leitung ausgeführt ist.

4. Kommunikationssystem nach einem der vorhergehenden Ansprüche, dadurch gekennzeichnet, daß der drahtlose Informationsaustausch zwischen dem mobilen Teilnehmerendgerät und der Ringleitung mittels einer Funk-Übertragungsstrecke durchgeführt wird.

5. Kommunikationssystem nach einem der Ansprüche 1 bis 3, dadurch gekennzeichnet, daß der drantlose Informationsaustausch zwischen dem mobilen Teilnehmerendgerät und der Ringleitung mittels einer Infrarot-Übertragungsstrecke durchgeführt wird.

6. Kommunikationssystem nach einem der vorhergehenden Ansprüche, dadurch gekennzeichnet, daß der Informationsaustausch zwischen ortsgebundenen Teilnehmerstationen (1, 2, 3 ... n, n+1, n+2)·einerseits und mobilen Teilnehmerendgeräten andererseits nach dem Zeitmultiplexverfahren durchgeführt wird, wobei jeder Informationsblock mit der Adresse des gewünschten Teilnehmers versehen ist.

7. Kommunikationssystem nach einem der vorhergehenden Ansprüche, dadurch gekennzeichnet, daß die Informationen in einem festgelegten Rahmenraster übertragen werden und daß jeder Rahmenanfang durch ein festgelegtes Kennzeichen erkennbar ist, so daß eine zentrale Synchronisierung für das gesamte Kommunikationssystem entfällt.

8. Kommunikationssystem nach einem der vorhergehenden Ansprüche, dadurch gekennzeichnet, daß jeweils ein mobiles Teilnehmerendgerät einer ortsgebundenen Teilnehmerstation adressenmäßig fest zugeordnet ist.

**Claims**

1. Communications system for stationary and mobile subscribers, wherein following the recognition of the address by means of his mobile subscriber terminal device, the called mobile subscriber is notified by a signal which is assigned to this address, and the transmitter of this mobile subscriber terminal device is put into operation, and wherein items of information which come in for the subscriber and go out from the subscriber are exchanged between the respective stationary subscriber station and the respective mobile subscriber terminal device, characterised in that a ring line is provided as transmission path, which ring line is conducted through every compartment in the region of an existing exchange device and into which subscriber-individual input and output devices are inserted, that both the respective stationary subscriber stations (1, 2, 3 ... n, n+1, n+2) and an exchange station (Z) are connected via subscriber-individual switching means to their respectively assigned output/input devices in addition to the exchange device, that in each respective compartment there is arranged a connection device which consists of a transmitter and a receiver and by means of which access from a mobile subscriber terminal device to the transmission path is enabled, that the subscriber station (e.g. n+1) of a called subscriber, who is not at his place, is switched on to the ring line by means of the respective subscriber-individual switching means, and that an available item of information is transmitted in wireless fashion with an address assigned to the called subscriber in all respective compartments.

2. Communications system as claimed in claim 1, characterised in that the ring line is designed as an electrical line.

3. Communications system as claimed in claim 1, characterised in that the ring line is designed as an optical line.

4. Communications system as claimed in one of the preceding claims, characterised in that the wireless information exchange between the mobile subscriber terminal device and the ring line is carried out by means of a radio transmission path.

5. Communications system as claimed in one of the claims 1 to 3, characterised in that the wireless information exchange between the mobile subscriber terminal device and the ring line is effected by means of an infrared transmission path.

6. Communications system as claimed in one of the preceding claims, characterised in that the information exchange between stationary subscriber stations (1, 2, 3 ... n, n+1, n+2) on the one hand and mobile subscriber terminal devices on the other hand is carried out in accordance with the t.d.m. method, each block of information being provided with the address of the required subscriber.

7. Communications system as claimed in one of the preceding claims, characterised in that the items of information are transmitted in a fixed frame raster and that each frame start is recognisable by a fixed identification, so that a central synchronisation for the overall communications system is eliminated.

8. Communications system as claimed in one of the preceding claims characterised in that a mobile subscriber terminal device is respectively firmly assigned to a stationary subscriber station in terms of the address.

## Revendications

1. Système de communication pour des abonnés fixes et mobiles, dans lequel l'abonné mobile appelé, après identification de l'adresse, a son attention attirée par son appareil d'extrémité mobile, par un signal attribué à cette adresse, l'émetteur de cet appareil d'extrémité mobile étant alors mis en service, et dans lequel ont lieu des échanges d'informations arrivant à l'abonné et partant de ce dernier, entre le poste d'abonné fixe concerné et le poste d'extrémité mobile concerné, caractérisé par le fait qu'au titre de voie de transmission on prévoit une boucle qui passe par chaque espace de la région d'un équipement de commutation existant et dans lequel sont insérés des dispositifs d'entrée/sortie individuels par abonné, que les postes d'abonnés fixes concernés (1, 2, 3 ... n, n+1, n+2) de même qu'un poste central (Z) sont reliés non seulement à l'équipement de commutation mais également, et par l'intermédiaire de moyens de commutation individuels par abonné, aux dispositifs d'entrée/sortie qui leur sont associés, que dans chaque espace concerné est prévu un dispositif de liaison constitué par un émetteur et par un récepteur, et par l'intermédiaire duquel est également rendu possible, à partir d'un poste d'extrémité mobile d'abonné, un accès à la voie de transmission, que le poste d'abonné (par exemple n+1) d'un abonné appelé qui ne se trouve pas à sa place est relié, par l'intermédiaire des moyens de commutation concernés et individuels par abonné, à la boucle, et qu'une information qui est présente est émise dans tous les espaces, par voie hertzienne, avec une adresse qui est associée à l'abonné appelé.

2. Système de communication selon la revendication 1, caractérisé par le fait que la boucle est réalisée sous la forme d'une ligne électrique.

3. Système de communication selon la revendication 1, caractérisé par le fait que la boucle est réalisée sous la forme d'une ligne optique.

4. Système de communication selon l'une des revendications 1 à 3, caractérisé par le fait que l'échange d'informations sans fil entre l'appareil d'extrémité mobile et la boucle est réalisé par voie hertzienne.

5. Système de communication selon l'une des revendications précédentes, caractérisé par le fait que l'échange d'informations sans fil entre les appareils d'extrémité mobiles et la boucle a lieu à l'aide d'une voie de transmission par rayonnement infrarouge.

6. Système de communication selon l'une des revendications précédentes, caractérisé par le fait que l'échange d'informations entre le poste d'abonné fixe (1, 2, 3 ... n, n+1, n+2) d'une part, et les appareils d'extrémité mobiles, d'autre part, est réalisé selon un procédé de multiplexage par répartition dans le temps, chaque bloc d'informations étant pourvu de l'adresse de l'abonné souhaité.

7. Système de communication selon l'une des revendications précédentes, caractérisé par le fait que les informations sont transmises suivant un agencement tramé déterminé et que chaque début de trame est susceptible d'être reconnu par une caractéristique déterminée de façon à se passer d'une synchronisation centrale pour l'ensemble du système de communication.

8. Système de communication selon l'une des revendications précédentes, caractérisé par le fait qu'un appareil d'extrémité mobile est associé de façon déterminée, du point de vue de l'adresse, à un poste d'abonné fixe.